# EUROPEAN PATENT APPLICATION

(11) **EP 3 795 623 A1**
(43) Date of publication of application: **24.03.2021**
(21) Application number: 20196894.8
(22) Date of filing: 18.09.2020
(51) Int. Cl.: C08J 11/04, C08J 11/14, C08L 3/02, C08L 99/00, C08B 30/10

(54) **COMPOSITION**

(30) Priority: 20.09.2019 GB 201913593
(71) Applicant: Norner Verdandi AS, 3960 Stathelle (NO)
(72) Inventor: Chowreddy, Ravindra Reddy, 3960 Stathelle (NO); Myhre, Ole Jan, 3960 Stathelle (NO); Lundquist, Morten, 3960 Stathelle (NO); Fredriksen, Siw Bodil, 3960 Stathelle (NO); Helland, Irene, 3970 Langesund (NO)
(74) Representative: Gordon, Kirsteen Helen

(57) **Abstract**

The present invention relates to a moulded article comprising a biodegradable composition, wherein said composition comprises:
(i) potato peel;
(ii) a plasticiser;
(iii) a filler;
(iv) a bioplastic; and
(v) a biodegradable polymer modifier.

## Description

### INTRODUCTION

The present invention relates to a moulded article comprising a moulding composition comprising potato peel, a plasticiser, a filler, a bioplastic and a biodegradable polymer modifier. The invention also relates to the moulding composition per se, a method for preparing the moulding composition, and a method for preparing the article. Additionally the invention relates to the use of the moulding composition in moulding and methods of moulding using the moulding composition.

### BACKGROUND

Modern society utilises large amounts of petroleum-based plastics in a wide range of applications. About 25.8 million tonnes of plastic waste is generated in Europe every year. Plastic waste management is a critical issue. Inappropriate disposal of plastic waste causes soil and water contamination. For example, incineration or burning of plastic waste leads to production of toxic gases. Recycling of plastic waste is a complex and costly process because it demands sorting of mixed plastic. Sending plastic waste to landfill is not a viable solution as it is expensive and does not meet the increasingly stringent requirements of governmental policies and regulations.

At present a range of biodegradable plastic alternatives, such as polylactic acid (PLA), polyhydroxyalkanoates (PHAs), polybutylene succinate (PBS), polycaprolactone (PCL) and thermoplastic starch (TPS) are available in the market. There are, however, issues with the currently available biodegradable plastic alternatives, so called "bioplastics". Generally, the bioplastics are expensive and, as a result, have only been used commercially in a limited number of applications. Moreover, the majority of bioplastics currently sold on the market as biodegradable plastics are not actually biodegradable in soil. Most require composting in industrial composting facilities.

US 6,482,341 discloses a process for making mouldings from biological residual material, such as potato skins. The moulding described in US 6,482,341 are continuous mouldings such as tubes, channels, sheets as well as articles such as pots and boxes. US 6,482,341 teaches that in addition to the biological residual material, other biodegradable material can be used. A long list of possible materials is mentioned including, *inter alia,* polyesters such as polycaprolactone and polylactic acid. The possibly of adding plasticiser and filler to the composition is also mentioned.

US 6,482,341 discloses that shaping of the composition to form moulded products may be effected by casting, injection moulding, pressing and similar techniques. In the examples section, however, the compositions comprising polycaprolactone and polylactic acid are only kneaded and not moulded. Moreover there is no disclosure of the mechanical performance of the final mouldings and no mention at all in US 6,482,341 of achieving an overall desirable balance between mechanical strength, water absorption and soil biodegradability.

### SUMMARY OF INVENTION

Viewed from a first aspect the present invention provides a moulded article comprising a biodegradable composition, wherein said composition comprises:
(i) potato peel;
(ii) a plasticiser;
(iii) a filler;
(iv) a bioplastic; and
(v) a biodegradable polymer modifier.

Viewed from a further aspect the present invention provides a moulding composition as hereinbefore defined comprising:
(i) potato peel;
(ii) a plasticiser;
(iii) a filler;
(iv) a bioplastic; and
(v) a biodegradable polymer modifier.

Viewed from a further aspect the present invention provides a method for preparing a moulding composition, comprising mixing potato peel; a plasticiser; a filler; a bioplastic; and a biodegradable polymer modifier.

Viewed from a further aspect the present invention provides a method for preparing an article as hereinbefore defined comprising:
(i) moulding a composition comprising potato peel; a plasticiser; a filler; a bioplastic; and a biodegradable polymer modifier.

Viewed from a further aspect the present invention provides the use of a moulding composition as hereinbefore defined in moulding, preferably injection moulding.

Viewed from a further aspect the present invention provides a method of moulding comprising:
(i) introducing a moulding composition as hereinbefore defined into a mould;
(ii) moulding said composition; and
(iii) removing said composition from said mould.

### DEFINTIONS

As used herein a "biodegradable composition" refers to a composition which is capable of decaying naturally in a way that is not harmful to the environment (e.g. by being decomposed by bacteria or other living organisms).

As used herein a "soil biodegradable composition" refers to a composition which is biodegradable in soil, e.g. in a natural soil environment.

As used herein the term "bioplastic" refers to a plastic material which is biodegradable. The bioplastic may be biomass-based, e.g. from agricultural byproducts or fossil fuel-based.

As used herein the term "plasticiser" refers to a substance which is added to the moulding compositions to improve the flexibility of the final moulded articles.

As used herein the term "biodegradable polymer modifier" refers to a substance which is added to the moulding compositions to improve the processability of the composition as well as improve the balance of physical properties of articles moulded from the composition. It is therefore a polymer modifier which itself is biodegradable.

As used herein the term "non-chemically modified potato peel" refers to potato peel which is not chemically modified following its removal from a potato and prior to its incorporation into the moulding composition. Thus, for example, the peel is not derivatised (e.g. acetylated) or oxidised.

As used herein the term "non-toxic" refers to the fact that a compound or composition is not poisonous to living things.

As used herein the term "lubricant" refers to an additive which improves the processability of the moulding composition, typically by improving the flow properties of the composition.

As used herein the term "colourant" refers to pigments, dyes and mixtures thereof.

As used herein "tensile strength" refers to the resistance of a material to breaking under tension. Typically the tensile strength is measured on a Zwick Z010 at room temperature according to ISO 527.

As used herein "tensile modulus" refers to the stress-strain curve of a material under direct tensile loading. Typically the tensile strength is measured on a Zwick Z010 at room temperature according to ISO 527.

As used herein "impact strength" refers to the ability of a material to withstand a suddenly applied load (e.g. an impact from a pendulum). Typically the impact strength is measured on a Resilvis 125 Cryo at room temperature according to ISO 179-1.

### DETAILED DESCRIPTION OF THE INVENTION

The present invention relates to a moulding composition and a moulded article comprising a biodegradable composition, wherein said composition comprises:
(i) potato peel;
(ii) a plasticiser;
(iii) a filler;
(iv) a bioplastic; and
(v) a biodegradable polymer modifier.

The moulded articles of the present invention are biodegradable. Thus, the moulded articles may be degraded in an industrial composter or in a natural environment. Preferably, the moulded articles of the present invention are biodegradable in a natural environment and still more preferably in soil, i.e. the moulded articles are soil biodegradable. Still more preferably the moulded particles of the present invention are biodegradable in a natural environment, e.g. soil, in a period of less than 6 months, and more preferably less than 3 months. This makes the moulded articles of the present invention highly attractive because they are easy to dispose of at the end of their life without causing any environmental harm.

Advantageously, the moulding compositions and moulded articles of the present invention comprise potato peel, which is a sustainable and inexpensive waste-product from the food industry. As a result, the moulding composition and moulded articles of the present invention are relatively inexpensive compared to many currently available biodegradable plastic alternatives. The moulded articles of the invention are highly biodegradable, and preferably soil biodegradable, and possess an attractive combination of other physical properties, namely mechanical strength and water absorption. This makes the moulding composition ideal for making moulded articles, especially injection moulded articles, such as packaging (e.g. non-food packaging) and agricultural and horticultural containers (e.g. plant pots). The water absorption property of the moulded articles of the invention is particularly advantageous when the articles are pots for agricultural and horticultural applications. The adsorbed water can be supplied to plant roots. In addition, the water adsorption property of the moulded article facilitates the biodegradation process, in particular the soil biodegradation process.

The moulding compositions and moulded articles of the present invention comprise at least ingredients (i)-(v) recited above. Ingredients (iv) and (v), i.e. the bioplastic and the biodegradable polymer modifier are different ingredients, i.e. the same polymer cannot perform both functions.

### Potato peel

The moulding compositions and moulded articles of the present invention comprise a biodegradable composition comprising potato peel.

Preferably the moulding composition and moulded articles of the present invention comprise non-chemically modified potato peel. Thus the potato peel present in the moulding composition and moulded article of the present invention is preferably not chemically modified after its exit from potato processing and prior to incorporation into the moulding composition and moulded articles of the present invention. This keeps the cost of the potato peel low. Preferably the potato peel is obtained as a by-product from the potato processing industry. Particularly preferably the potato peel is from steamed peeled potatoes or abrasive peeled potatoes. In the potato processing industry, the potatoes are sometimes washed and then treated with steam under pressure so that the skin detaches from the remaining potato thereby enabling the skin to subsequently be removed by brushing. The potato peel incorporated into the present invention may preferably be the product removed in this step. Preferably, however, the potato peel is the product obtained from an abrasive potato peeling unit.

In preferred moulding compositions and moulded articles of the present invention the entirety of the potato peel is incorporated into the composition. Thus preferably the potato peel is not divided or separated into different fractions (e.g. carbohydrate, protein and cork) prior to incorporation into the moulding composition and moulded articles of the present invention.

Particularly preferably the potato peel is not oxidised prior to incorporation into the moulding composition and moulded article of the present invention. Particularly preferably the potato peel is not acetylated prior to incorporation into the moulding composition or moulded article of the present invention. Particularly preferably the potato peel is not cross-linked prior to incorporation into the moulding composition or moulded article of the present invention. Particularly preferably the potato peel is not derivatised prior to incorporation into the moulding composition or moulded article of the present invention. Still more preferably the potato peel is not oxidised, acetylated, cross-linked or derivatised prior to incorporation into the moulding composition or moulded article of the present invention.

Optionally the potato peel is dried or partially dried. Preferably drying is the sole processing carried out on the peel received as waste from potato processing. If drying is not carried out then preferably the potato peel is not processed to alter its natural composition, i.e. it is used raw. Preferably therefore at least 95 wt% and more preferably 95-100 wt%, and still more preferably 97-100 wt% of the potato peel received as waste from potato processing is incorporated into the moulding compositions and moulded articles of the present invention.

In preferred moulding compositions and moulded articles of the present invention the potato peel is dried prior to incorporation into the moulding composition and moulded articles of the present invention. Preferably the water content of the dried potato peel is 0.5-10 wt%, more preferably 1-7.5 wt% and still more preferably 2-6 wt%. Drying may be carried out by any conventional procedure known in the art, e.g. in an oven. Typical drying conditions might be, for example, 35-70 °C for 24-72 hours.

Preferably the dried potato peel is milled and/or ground. The process of milling and/or grinding reduces the size of the potato peel and generates a more homogeneous mixture of peel in the form of substantially spherical particles. Milling and/or grinding may be carried out by conventional processes known in the art. Thus, in preferred moulding compositions and moulded articles of the present invention the potato peel is in the form of particles and still more preferably in the form of powder. Particularly preferably the potato peel particles have an average diameter of 250-600 µm and more preferably 300-500 µm. Still more preferably the potato peel particles have a d_{0.5} of 100-400 µm and more preferably 200-300 µm. Still more preferably the potato peel particles have a d_{0.9} of 400-700 µm and more preferably 500-600 µm. The provision of potato peel in the form of particles having a narrow particle size distribution advantageously improves the consistency of the processability of the moulding composition and the performance of the subsequent moulded article. For example, it improves the consistency of the tensile properties and water absorption properties of the moulded article formed.

The amount of potato peel present in the moulding composition and the moulded articles of the present invention is preferably 10-90 wt%, more preferably 20-80 wt% and even more preferably 30-70 wt% potato peel based on the total weight of the dry ingredients. The amount of potato peel present in the moulding composition can be used to control the level and/or rate of biodegradability, and in particular soil biodegradability. When a higher rate of soil biodegradability is sought, the amount of potato peel present in the moulding composition is preferably 50-90 wt%, more preferably 60-90 wt% and still more preferably 75-90 wt%, based on the total weight of the dry ingredients. When a lower rate of soil biodegradability is sought, the amount of potato peel present in the moulding composition is preferably 10-50 wt%, more preferably 10-40 wt% and still more preferably 10-25 wt%, based on the total weight of the dry ingredients. The desirable rate of soil biodegradability is often determined by the ultimate end-application.

### Plasticiser

The moulding compositions and moulded articles of the present invention also comprises a plasticiser. The purpose of the plasticiser is to improve the flexibility of the moulded articles, once formed. This means, for example, the moulded article is less likely to tear during removal from the mould and during end-use.

Preferred plasticisers present in the moulding compositions and moulded articles of the present invention are biodegradable and safe, i.e. non-toxic to the environment. Representative examples of suitable plasticisers include sorbitol, maltitol, xylitol, mannitol, erythritol, glycerol, glycerol trioleate, citric acid, tributyl citrate, acetyl tri-ethyl citrate, glyceryl triacetate, polyethylene oxide, polypropylene oxide, ethylene glycol, diethylene glycol, polyethylene glycol, polypropylene glycol, urea and mixtures thereof. Glycerol is a preferred plasticiser. It has been found to form particularly flexible and non-brittle moulded articles when combined with potato peel. Glycerol has a low molecular weight and is hydrophilic in nature, and as a result, it penetrates into the inter and intramolecular framework of the starch component of the potato peel. This facilitates processing as well as improving the flexibility of the final moulded products.

Preferred moulding compositions and moulded articles of the present invention comprise potato peel and plasticiser in a weight ratio of 1:1 to 20:1, more preferably 1:1 to 10:1 and still more preferably 2:1 to 5:1. At these ratios the moulding compositions are facile to mould, e.g. they do not stick to the mould, and the resulting moulded articles are non-brittle.

Preferred moulding compositions and moulded articles of the present invention comprise 10-50 wt%, more preferably 15-45 wt% and even more preferably 25-35 wt% plasticiser, based on the total weight of the dry ingredients. Still further preferred moulding compositions and moulded articles of the present invention comprise 10-35 wt%, more preferably 10-20 wt% and still more preferably 12-18 wt% plasticiser, based on the total weight of the dry ingredients.

### Filler

The moulding compositions and moulded articles of the present invention also comprises a filler. The purpose of the filler is generally to increase the bulk of the moulded article. It has been found, however, that in the potato peel-containing moulding compositions and moulded articles of the present invention the filler also improves the mechanical strength, in particular the tensile properties, of the final moulded articles as well as the water absorption levels. The latter in turn positively impacts on biodegradability, especially soil biodegradability.

Preferably the filler is biodegradable. Preferably the filler is non-toxic.

The fillers present in the moulding compositions and moulded articles of the present invention may be organic or inorganic or a mixture thereof. Representative examples of fillers include wood flour, cellulose fibre, lignin, lignocellulose, chitosan, milled chicken feather, clay (e.g. kaolin, bentonite, montmorillonite, cloisite, halloysite and layered double hydroxide), talc, calcium carbonate, natural fibres (e.g. shredded wood, milled wheat straw, milled rice straw, grass stem, sugarcane bagasse, hemp, jute, flax, hemp, kenaf, chaff, rice husk, ground nut shells, seed hulls, coir) and mixtures thereof. Particularly preferably the fillers present in the moulding compositions and moulded articles of the present invention are selected from wood flour, lignocellulose, lignin, talc, calcium carbonate, bentonite, montmorillonite, halloysite and mixtures thereof. Generally, fillers with a relatively high aspect ratio are preferred. Thus more preferably the filler is selected from clays, lignocellulose and mixtures thereof.

The amount of filler present in the moulding compositions and moulded articles of the present invention is preferably 5-60 wt%, more preferably 10-45 wt% and even more preferably 10-30 wt%, based on the total weight of the dry ingredients.

### Bioplastic

The moulding compositions and moulded articles of the present invention also comprises a bioplastic. The purpose of the bioplastic is to improve the compounding and moulding of the composition, thereby facilitating the production of moulded articles. Without the presence of a bioplastic, the final potato peel-based moulded articles were found to be more brittle.

The bioplastic present in the moulding compositions and the moulded articles of the present invention is preferably selected from polycaprolactone (PCL), thermoplastic starch (TPS), poly (lactic acid) (PLA), poly (glycolic acid), (PGA), poly (lactide-co-glycolide) (PLGA), poly (lactide-co-caprolactone) (PLCL), polybutylene succinate (PBS), polybutylene adipate terephthalate (PBAT), polybutylene succinate adipate (PBSA), polyhydroxyalkanoates (PHAs), polyalkylene carbonates (e.g., polypropylene carbonate (PPC), polycyclohexene carbonate (PCHC), polyether polycarbonate polymers (PECs)), and mixtures thereof. More preferably the bioplastic is selected from thermoplastic starch (TPS), poly (glycolic acid), (PGA), poly (lactide-co-glycolide) (PLGA), poly (lactide-co-caprolactone) (PLCL), polybutylene succinate (PBS), polybutylene adipate terephthalate (PBAT), polybutylene succinate adipate (PBSA), polyhydroxyalkanoates (PHAs), polypropylene carbonate (PPC), polycyclohexene carbonate (PCHC) and mixtures thereof. Still more preferably the bioplastic is selected from poly (lactic acid) (PLA), polybutylene succinate (PBS), polybutylene adipate terephthalate (PBAT), polybutylene succinate adipate (PBSA), polypropylene carbonate (PPC), and mixtures thereof.

The amount of bioplastic present in the moulding compositions and moulded articles of the present invention is preferably 1-50 wt%, more preferably 2-40 wt% and even more preferably 5 to 30 wt%, based on the total weight of the dry ingredients. The amount of bioplastic present in the moulding composition impacts on the level and rate of biodegradability, and in particular soil biodegradability. When a higher rate of soil biodegradability is sought, the amount of bioplastic present in the moulding composition is preferably 1-30 wt%, more preferably 1-20 wt% and still more preferably 1-15 wt%, based on the total weight of the dry ingredients. When a lower rate of soil biodegradability is sought, the amount of bioplastic present in the moulding composition is preferably 5-50 wt%, more preferably 10-50 wt% and still more preferably 15-90 wt%, based on the total weight of the dry ingredients. The desirable rate of soil biodegradability is often determined by the ultimate end-application.

### Biodegradable polymer modifier

The moulding compositions and moulded articles of the present invention also comprise a biodegradable polymer modifier. The purpose of the biodegradable polymer modifier is to improve the processability of the moulding composition, specifically the melt strength, and the mechanical properties of the moulded articles. More specifically the presence of the biodegradable polymer modifier improves the melt strength of the moulding composition during extrusion and compounding as well as the homogeneity of the moulding composition. The biodegradable polymer modifier also improves the impact strength of the final moulded articles.

Preferably the biodegradable polymer modifier is a processing aid. The biodegradable polymer modifier is a different polymer to the bioplastic.

The biodegradable polymer modifier present in the moulding composition is preferably soil biodegradable. Preferably the biodegradable polymer modifier is processable at a temperature of less than 180 °C, and still more preferably at a temperature of less than 150 °C.

The biodegradable polymer modifier present in the moulding composition and moulded articles of the present invention may be selected from polyvinyl alcohol, polyvinyl acetate-ethylene copolymer, ethylene vinyl alcohol, polyvinyl acetate and mixtures thereof. Particularly preferably, the biodegradable polymer modifier is selected from polyvinyl alcohol, vinyl acetate-ethylene copolymer and mixtures thereof.

Preferred moulding compositions and moulded articles of the present invention comprise 1-50 wt%, more preferably 2-40 wt% and even more preferably 5 to 30 wt% biodegradable polymer modifier, based on the total weight of the dry ingredients.

### Cross-linking agent.

The moulding compositions and moulded articles of the present invention preferably further comprises a cross-linking agent. The purpose of the cross-linking agent is to obtain mechanically strong moulded articles. The cross-linking agent is believed to form cross-links within the starch component of the potato peel.

Preferably the cross-linking agent is biodegradable. Preferably the cross-linking agent is non-toxic.

Preferably the cross-linking agent is selected from formaldehyde, formic acid, disodium tetraborate (borax), citric acid, epichlorohydrin, malonic acid, oxidized sucrose, glutaraldehyde, trimetaphosphate, phosphorous oxychloride, sodium tripolyphosphate, hexamethoxy methylmelamine and mixtures thereof. Particularly preferably the cross-linking agent is citric acid.

It will be appreciated that some cross-linking agents require or benefit from the presence of a catalyst to initiate their cross-linking reactions. For instance, formaldehyde is typically used in conjunction with ammonium chloride. The skilled person will be aware of typical combinations.

Preferred moulding compositions and moulded articles of the present invention comprise 0-5 wt%, more preferably 0.5-5 wt% and even more preferably 0.5 to 3 wt% cross-linking agent, based on the total weight of the dry ingredients.

### Lubricant

The moulding compositions and moulded articles of the present invention optionally further comprises a lubricant. The purpose of the lubricant is to improve the ability of the moulded article to be removed from a mould.

Preferably the lubricant is biodegradable. Preferably the lubricant is non-toxic.

Preferred moulding compositions and moulded articles of the present invention comprise 0-5 wt%, more preferably 0.5-5 wt% and even more preferably 0.5-3 wt% lubricant, based on the total weight of the dry ingredients.

### Colourant

The moulding compositions and moulded articles of the present invention optionally further comprise a colourant. Any conventional colourant may be employed. Thus the colourants may be pigments, dyes or mixtures thereof. Preferably the colourant is a pigment. Preferably the pigment present in the moulding compositions and moulded articles of the present invention is non-toxic. Preferably the pigment is biodegradable.

More preferably the colourant is an organic pigment or inorganic pigment. Many conventional pigments used to colour articles are inorganic and comprise metals, e.g. iron and cadmium pigments have conventionally been used to provide red or orange colouring and titanium dioxide is used to provide white colour.

Still more preferably the pigment present in the moulding composition and moulded articles of the present invention is organic. Representative examples of organic pigments include carbon black, acetylene black and mixtures thereof.

Preferred moulding compositions and moulded articles of the present invention comprise 0-5.0 wt%, more preferably 0.3-4.0 wt% and even more preferably 0.5-2.0 wt% colourant, based on the total weight of the dry ingredients.

Particularly preferred moulding compositions and moulded articles of the present invention comprise:
(i) 10-90 wt% potato peel, preferably the entire potato peel, particularly preferably a non-chemically modified potato peel;
(ii) 10-50 wt% plasticiser;
(iii) 5-60 wt% filler;
(iv) 1-50 wt% bioplastic;
(v) 1-50 wt% biodegradable polymer modifier;
(vi) optionally a cross-linking agent;
(vii) optionally a lubricant; and
(viii) optionally a colourant.

Yet further preferred moulding compositions of the present invention comprise:
(i) 30-70 wt% non-chemically modified whole potato peel;
(ii) 10-35 wt%, preferably 25-35 wt% glycerol;
(iii) 10-30 wt% filler selected from wood flour, cellulose fibre, lignin, lignocellulose, chitosan, milled chicken feather, clay, talc, calcium carbonate, natural fibres and mixtures thereof;
(iv) 5-30 wt% bioplastic selected from polycaprolactone (PCL), thermoplastic starch (TPS), poly (lactic acid) (PLA), poly (glycolic acid), (PGA), poly (lactide-co-glycolide) (PLGA), poly (lactide-co-caprolactone) (PLCL), polybutylene succinate (PBS), polybutylene adipate terephthalate (PBAT), polybutylene succinate adipate (PBSA), polyhydroxyalkanoates (PHAs), polypropylene carbonate (PPC), polycyclohexene carbonate (PCHC) and mixtures thereof;
(v) 5-30 wt% biodegradable polymer modifier selected from polyvinyl alcohol, vinyl acetate-ethylene copolymer and mixtures thereof;
(vi) optionally a cross-linking agent;
(vii) optionally a lubricant; and
(viii) optionally a colourant.

### Preparation

The present invention also relates to a method for preparing a moulding composition as hereinbefore described, comprising mixing potato peel; a plasticiser; a filler; a bioplastic; and a biodegradable polymer modifier.

In preferred processes of the invention, the potato peel is dried prior to use. The potato peel, preferably dried potato peel may then be milled to provide coarse particles. The coarse particles of potato peel are preferably then further milled to provide a potato peel powder, preferably a dried potato peel powder. Particularly preferably the potato peel particles have an average diameter of 250-600 µm and more preferably 300-500 µm. Still more preferably the potato peel particles have a d_{0.5} of 100-400 µm and more preferably 200-300 µm. Still more preferably the potato peel particles have a d_{0.9} of 400-700 µm and more preferably 500-600 µm.

In preferred processes of the invention, the potato peel, preferably the milled potato peel, even more preferably the dried milled potato peel, is mixed with plasticiser to provide a potato peel-plasticiser mixture. Preferably the potato peel-plasticiser mixture is dried. Typical drying conditions are 12 hr at 60 °C. Drying makes the mixture a free-flowing powder which eases transfer of the mixture to the extruder. Preferably the potato peel-plasticiser mixture, more preferably the dried potato peel-plasticiser mixture, is then extruded.

The potato peel-plasticiser mixture is preferably mixed with a filler, a bioplastic and a biodegradable polymer modifier. The filler, bioplastic and biodegradable polymer modifier may be added either concurrently or consecutively. In preferred processes of the invention the filler, bioplastic and biodegradable polymer modifier are added concurrently. In other preferred processes of the invention the filler, bioplastic and/or biodegradable polymer modifier are added in separate steps.

In preferred processes of the invention the moulding composition is extruded. In more preferred processes the potato peel-plasticiser mixture is extruded before the filler, bioplastic and biodegradable polymer modifier are added. In even more preferred processes the moulding composition is extruded after the addition of the filler, bioplastic and/or biodegradable polymer modifier. In particularly preferred processes of the invention the moulding composition is extruded both before and after the addition of the filler, bioplastic and/or biodegradable polymer modifier.

After extrusion, the extruded moulding composition is preferably cooled. The extruded moulding composition is preferably pelletised. More preferably the extruded moulding composition is pelletised to form granules. Particularly preferably the granules have a diameter of about 1-5 mm and a length of about 1-5 mm. More preferably the granules have a diameter of about 2-4 mm and a length of about 2-4 mm. Even more preferably the granules have a diameter of about 3 mm and a length of about 2 mm.

### Moulded article

The moulded article comprising a biodegradable composition of the present invention is preferably moulded by casting, pressing, compression and/or by injection moulding. More preferably the moulded article is injection moulded.

In injection moulding the moulded articles may be moulded using conventional injection moulding equipment and conditions. Injection moulding may be carried out using commercially available equipment such as on a Netstal HP1200 injection moulding machine. Preferably the injection speed is 150 to 300 mm/sec, more preferably 170 to 250 mm/sec. Preferably the injection cycle time is 10-30 seconds. Preferably the melt temperature is in the range 100-180 °C, more preferably 110-160 °C. Preferably the moulded article in the tool is cooled at 5 to 25 °C (e.g. about 10 °C). Preferably the moulded article is cooled in the tool for 3-20 seconds, preferably 5-10 seconds.

Particularly preferred injection moulding conditions are one or more of the following conditions: melt temperature of 150 °C;
injection speed of 200 mm/sec;
injection cycle time of 15 seconds;
cooling in the tool at 10 °C for 6 seconds; and/or
holding pressure of 600 bar during injection 4 seconds.

Representative example of types of articles that may be moulded include pots (e.g. plantable pots) for agriculture and horticulture applications, disposable cutlery (e.g. spoons, forks and knifes) and packaging containers for food and non-food dry products.

The mechanical properties of the moulded articles of the invention are important. They ensure that the moulded articles are able to retain their integrity during use and resist damage during use. Preferred moulded articles of the present invention have a tensile strength of at least 5 MPa, more preferably of at least 10 MPa and even more preferably a tensile strength of at least 15 MPa, e.g. as measured according to ISO 527. Preferred moulded articles have a tensile strength of 5 to 30 MPa, more preferably 10 to 30 MPa, e.g. as measured according to ISO 527. Further preferred moulded articles have a tensile modulus of at least 150 MPa, preferably at least 400 MPa and even more preferably at least 600 MPa, e.g. as measured according to ISO 527. Preferred moulded articles have a tensile modulus of 150 to 2000 MPa, more preferably 400 to 2000 MPa, e.g. as measured according to ISO 527. Preferred moulded articles have an impact strength of at least 0.5 kJ/m², more preferably at least .1.5 kJ/m² and even more preferably at least 2 kJ/m², e.g. as measured according to ISO 179-1. Preferred moulded articles have an impact strength of 0.5 to 10 kJ/m², more preferably 1.5 to 10 kJ/m², e.g. as measured according to ISO 179-1.

Preferred moulded articles of the present invention have a water absorption of 0 to 50 wt%, preferably 4 to 40 wt% and more preferably 10 to 35 wt% e.g. as measured according to the method described in the examples.

Even more preferably, the moulded article comprising a biodegradable composition of the present invention has:
a tensile strength of at least 6 MPa;
a tensile modulus of at least 150 MPa;
an impact strength of at least 0.5 kJ/m²; and
a water absorption of 0 to 50 wt%.

Particularly preferably the moulded article of the present invention is biodegradable in soil. This means that the moulded articles, over time, undergo a significant change in structure and therefore properties when buried in soil. Moulded articles of the invention are preferably degraded by a combination of microbial action and chemical degradation, e.g. hydrolysis based degradation when in contact with soil.

The present invention also relates to a method for preparing an article as hereinbefore described comprising:
(i) moulding a composition comprising potato peel; a plasticiser; a filler; a bioplastic; and a biodegradable polymer modifier.

Preferably, the composition is as hereinbefore described. Particularly preferably the moulding is a method of moulding hereinbefore described, e.g. injection moulding. The moulding composition is preferably prepared as hereinbefore defined. Particularly preferably the moulding composition is dried prior to injection moulding.

The present invention also relate to a method of moulding comprising:
(i) introducing a moulding composition into a mould;
(ii) moulding said composition; and
(iii) removing said composition from said mould.

Preferably, the composition is as hereinbefore described. Particularly preferably the moulding is a method of moulding hereinbefore described, e.g. injection moulding. The moulding composition is preferably prepared as hereinbefore defined. Particularly preferably the moulding composition is dried prior to injection moulding.

### BRIEF DESCRIPTION OF THE FIGURES

These and other aspects of the invention will now be further described, by way of example only, with reference to the accompanying figures in which:
Figure 1a shows the tensile strength and tensile modulus of compositions of the present invention and a comparative composition;
Figure 1b shows the impact strength of compositions of the present invention and a comparative composition;
Figure 2 shows the water absorption properties of compositions of the present invention and a comparative composition;

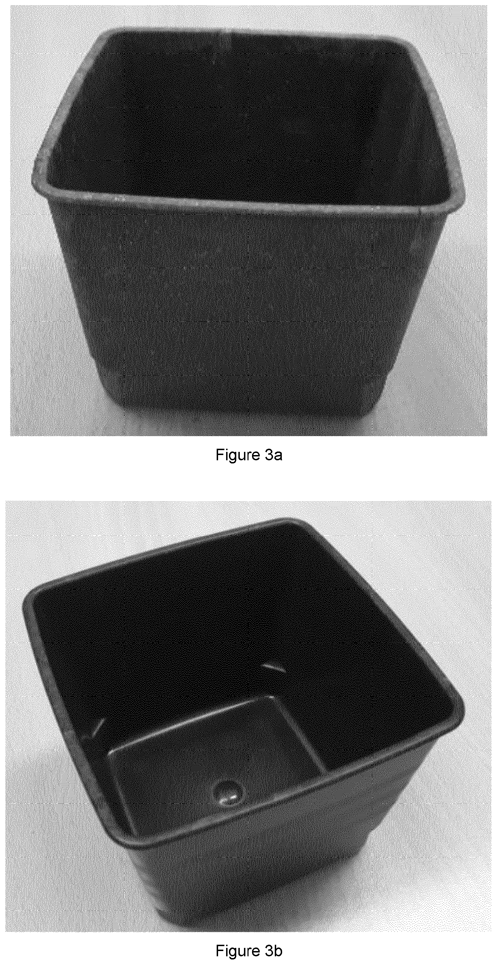

Figure 3a is a photograph of a moulded cup prepared from a composition of the present invention;
Figure 3b is a photograph of a moulded cup prepared from a composition of the present invention;
Figure 4a is a photograph of degradation test specimens prior to degradation testing in humid soil;
Figure 4b is a photograph of the same test specimens following 40 days immersion in humid soil;
Figure 4c is a photograph of one of the same test specimens following 120 days immersion in humid soil;
Figure 5a is a photograph of degradation test specimens prior to degradation testing;
Figure 5b is a photograph of the same test specimens following 22 days immersion in soil;
Figure 6a shows the tensile strength and tensile modulus of compositions of the present invention and comparative compositions; and
Figure 6b shows the impact strength of compositions of the present invention and a comparative composition.

### EXAMPLES

### Materials

The potato peel powder used in the examples was prepared as described below. The other compounds used in the examples are all commercially available.They are summarised in the table below.

| **Compound** | **Function** |
|---|---|
| Glycerol | Plasticiser |
| Citric acid | Cross linking agent/plasticiser |
| Lecithin | Lubricant |
| Polyvinyl alcohol (PVA), viscosity 3.4-4 mPa.s, degree of hydrolysis 84.2-86.2 %, average MW 12,000-30,000 | Biodegradable polymer modifier |
| Vinyl acetate ethylene copolymer, MFR 2.1 cm³/10 min, Tg -7 °C, density 1230 kg/m³ | Biodegradable polymer modifier |
| Polybutylene adipate terephthalate (PBAT), MFR: 2.7-4.9 g/10 min (190 °C, 2.16 kg) | Bioplastic |
| Polylactic acid (PLA), MFR: 14g/10 min (210 °C, 2.16 kg) | Bioplastic |
| Polypropylene carbonate (PPC), MW: 100,000-300,000, T_{g}: 15-40 °C | Bioplastic |
| Polybutylene succinate (PBS), MFR: 5 g/10 min (190 °C, 2.16 kg) | Bioplastic |
| Polybutylene succinate adipate (PBSA), MFR: 4 g/10 min (190 °C, 2.16 kg) | Bioplastic |
| Halloysite clay (Tubular clay, surface area: 20 m²/g) | Filler |
| Cloisite Na (natural bentonite, typical particle size <25 µm) | Filler |
| Cloisite 15A (Alkyl ammonium modified bentonite, typical particle size < 10 µm) | Filler |
| Calcium carbonate (nano-sized coated calcium carbonate) | Filler |
| Lignocellulose (avg. particle size 70-150 µm, density 110-145 g/l) | Filler |
| Wood flour (mesh size 120) | Filler |
| Lignin (MW: 5000 g/mol, S-content <3%) | Filler |
| Talc (mean particle size 5.1 µm) | Filler |

### Preparation of potato peel powder (PPP)

Raw potato peel, obtained from potato peeling industries, was dried in a hot air oven at 60°C for 48 hours. The dried potato peel was then milled into coarse particles and subsequently milled into fine powder. The milled potato peel was analysed by thermogravimetric analysis (TGA) to determine the water content in the dried potato peel. Based on the weight loss curves, the amount of water in potato peel was found to be around 5.0 wt%. The weight loss during isothermal TGA at 160 °C for 120 minutes was found to be around 1.3 wt%.

The particle size of the potato peel was determined using a Malvern instrument by the light scattering method. The d (0.5) and d (0.9) of the milled potato peel powder particles was 210 µm and 550 µm respectively. The potato peel was used without any further treatment.

### Preparation of compositions

Compounding was performed to produce potato peel bioplastic compositions. Powdered potato peel and glycerol were mixed mechanically then dried in an oven at 60 °C for 18 hours to provide a powdered potato peel-glycerol mixture. The resulting mixture was extruded using a twin-screw Prism 16 extruder with L/D = 25 at 140 °C and screw speed 200 rpm. The bioplastic string was air-cooled and pelletised. To the potato peel-glycerol pellets was added additives, as described in table 1 below, wherein all ingredients are shown as wt%, unless otherwise specified. The resulting mixture was compounded and then extruded as above. The bioplastic string was air-cooled and pelletised to form cylindrical granules with a diameter of 3 mm and a length of 2 mm.

### Injection moulding

The potato peel bioplastic pellets obtained from compounding were dried at 80 °C for 18 hours to remove any absorbed moisture before injection moulding. The dried pellets were injection moulded into multipurpose type 1B dog-bone specimens for tensile testing and impact testing. The pellets were injection moulded using an Engel CC90 injection moulding machine at 140 °C. The injection pressure was varied between 60 and 120 bar depending on the potato peel bioplastic composition.

### Test methods

The tensile properties of the samples were measured according to ISO 527. The testing was performed on a Zwick Z010 at room temperature. The injection moulded multipurpose type 1B dog-bone specimens were utilised. At least five parallel samples were tested for tensile properties. From stress-strain curves, the tensile strength, modulus and elongation at break were calculated.

The impact strength of the samples was measured according to ISO 179-1. The testing was performed on a Resilvis 125 Cryo at room temperature. Notched specimens were prepared from the multipurpose type 1B dog-bone specimens. At least five parallel samples were tested for impact strength. The amount of energy absorbed by a sample before it breaks was tested.

The moisture absorption characteristics of the samples was measured. The testing was performed in a desiccator at 100% relative humidity and room temperature to constant weight. The samples were prepared by cutting the multipurpose type 1B dog-bone specimens prepared as for the testing of tensile properties into square specimens with a length and width of 10 mm and a thickness of 4 mm. These samples were dried in a desiccator containing molecular sieves for two days prior to use. The samples were gravimetrically measured at regular intervals and absorption was calculated as the mean wt% change of three parallel test pieces.

Biodegradation studies were performed on samples prepared by hot pressing disc shaped specimens with a 30 mm diameter and a thickness of 1.5 mm from the extruded potato peel bioplastic pellets. Each sample was completely immersed in humid soil and removed and examined for degradation periodically. The level of degradation was visually observed.

The results of the testing are shown in table 2 below and in the Figures.

**Table 1 - Biodegradable formulations.**

| Sample ID | PP (wt%) | Plasticiser (wt%) | Modifier-1 (wt%) | Modifier-2 (wt%) | Cross-linker (wt%) | Bioplastic (wt%) | Filler (wt%) | Lubricant (wt%) |
|---|---|---|---|---|---|---|---|---|
| PPP-058* | 68 | Glycerol (29) | - | - | Citric acid (2) | - | - | Lecithin (1) |
| PPP-060* | 57 | Glycerol (25) | PVA (6) | Vinyl acetate ethylene copolymer (10) | Citric acid (1) | - | - | Lecithin (1) |
| PPP-066* | 44 | Glycerol (19) | PVA (6) | Vinyl acetate ethylene copolymer (10) | Citric acid (1) | PBAT (20) | - | - |
| PPP-071* | 55 | Glycerol (24) | - | - | Citric acid (1) | PBAT (20) | - | - |
| PPP-073 | 30 | Glycerol (13) | PVA (6) | Vinyl acetate ethylene copolymer (10) | Citric acid (1) | PBAT (20) | Halloysite (20) | - |
| PPP-074 | 30 | Glycerol (13) | PVA (6) | Vinyl acetate ethylene copolymer (10) | Citric acid (1) | PBAT (20) | Cloisite 15A (20) | - |
| PPP-075 | 30 | Glycerol (13) | PVA (6) | Vinyl acetate ethylene copolymer (10) | Citric acid (1) | PBAT (20) | Cloisite Na (20) | - |
| PPP-076 | 30 | Glycerol (13) | PVA (6) | Vinyl acetate ethylene copolymer (10) | Citric acid (1) | PBAT (20) | CaCO₃ (20) | - |
| PPP-077 | 30 | Glycerol (13) | PVA (6) | Vinyl acetate ethylene copolymer (10) | Citric acid (1) | PBAT (20) | Talc (20) | - |
| PPP-078 | 30 | Glycerol (13) | PVA (6) | Vinyl acetate ethylene copolymer (10) | Citric acid (1) | PBAT (20) | Lignocellulose (20) | - |
| PPP-079 | 30 | Glycerol (13) | PVA (6) | Vinyl acetate ethylene copolymer (10) | Citric acid (1) | PBAT (20) | Wood flour (20) | - |
| PPP-080 | 30 | Glycerol (13) | PVA (6) | Vinyl acetate ethylene copolymer (10) | Citric acid (1) | PBAT (20) | Lignin (20) | - |
| PPP-082 | 30 | Glycerol (13) | PVA (6) | Vinyl acetate ethylene copolymer (10) | Citric acid (1) | PLA (20) | Cloisite Na (20) | - |
| PPP-083 | 30 | Glycerol (13) | PVA (6) | Vinyl acetate ethylene copolymer (10) | Citric acid (1) | PPC (20) | Cloisite Na (20) | - |
| PPP-084 | 30 | Glycerol (13) | PVA (6) | Vinyl acetate ethylene copolymer (10) | Citric acid (1) | PPC (20) | Wood flour (20) | - |
| PPP-085 | 31 | Glycerol (13) | - | Vinyl acetate ethylene copolymer (15) | Citric acid (1) | PLA (20) | Wood flour (20) | - |

**Table 2 - Mechanical properties**

| Sample ID | Tensile modulus, MPa (STD) | Tensile strength, MPa (STD) | Impact Strength, kJ/m² (STD) |
|---|---|---|---|
| PPP-058* | 205 (13) | 9.1 (0.2) | 1 (0.19) |
| PPP-060* | 228 (9) | 8 (0.1) | 2.5 (0.44) |
| PPP-066* | 273 (13) | 7.9 (0.2) | 3.7 (0.3) |
| PPP-071* | 300 (10) | 10.6 (0.2) | 3.0 (0.5) |
| PPP-073 | 624 (11) | 13 (0.3) | 4.4 (0.5) |
| PPP-074 | 553 (2) | 12.7 (0.1) | 1.5(0.2) |
| PPP-075 | 1064 (8) | 16.6 (0.2) | 1.9 (0.2) |
| PPP-076 | 504 (64) | 13.1 (0.5) | 2.3 (0.4) |
| PPP-077 | 597 (11) | 14.4 (0.2) | 2.4 (0.3) |
| PPP-078 | 1224 (11) | 15.5 (0.2) | 2.4 (0.2) |
| PPP-079 | 1121 (14) | 14.3 (0.1) | 2.4 (0.2) |
| PPP-080 | 859 (28) | 17.5 (0.2) | 1.3 (0.2) |
| PPP-082 | 2217 (26) | 24.2 (0.1) | 1.0 (0.1) |

| | | | |
|---|---|---|---|
| *comparative examples | | | |

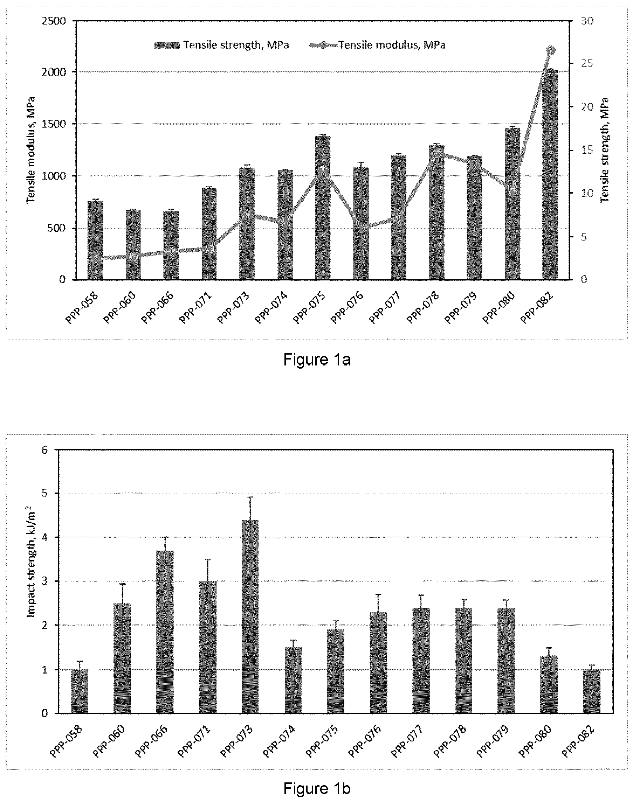

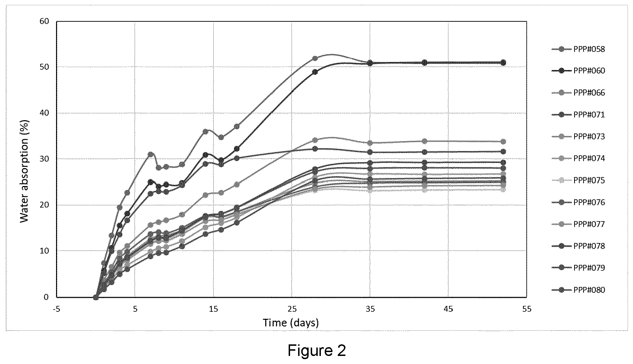

The results in Table 2 and Figure 1 show that moulded articles comprising compositions of the invention have improved mechanical properties, namely tensile strength and tensile modulus, compared to compositions lacking a filler and/or biodegradable polymer modifier (comparative samples PPP-066 and PPP-071). The water absorption curves shown in Figure 2 indicates that the presence of filler also affects water absorption. This is advantageous as it means that the performance of moulded articles, particularly over time, is less likely to deteriorate due to water ingress but still allow for biodegradability.

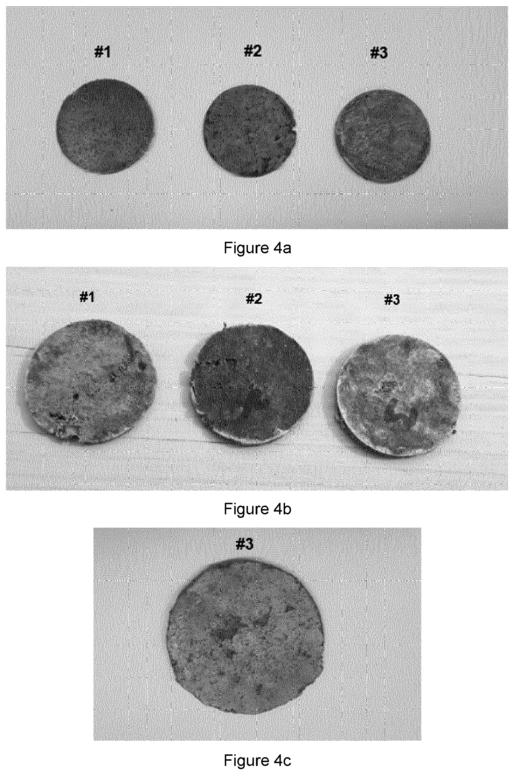

Soil biodegradation studies were also carried out as described above and the results are shown in Figures 4a-4c. Figure 4b shows the samples after 40 days in the soil. All of the samples showed slight surface degradation. The samples were returned into the soil for another 70 days. At the end of this time, the first two samples had completely disappeared and the third sample was partially degraded.

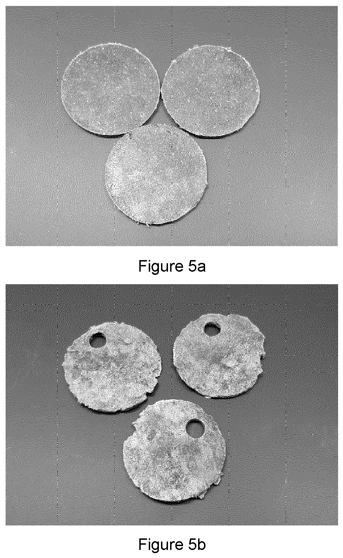

The same soil biodegradation study was repeated, only at a different location. Figure 5b shows the samples after 22 days in the soil. At this location, the samples underwent degradation much more rapidly as after only 22 days the samples had degraded much more significantly.

The results show that the moulded articles of the invention have a desirable combination of properties. The moulding composition is processable and gives rise to an extrudate with high melt-strength and that does not stick to the extruder or delaminate and is non-brittle, i.e. it is easy to handle. The injection moulded article per se has good mechanical properties, specifically tensile strength and tensile modulus as well as a desirable level of water absorption that does not impact on the performance of the articles but which facilitates degradability as well as complete soil degradability.

Further compositions were prepared as summarised in Table 3 below. The powdered potato peel and compositions were prepared as described above. The compositions marked with a * are comparative. The other compositions are compositions of the invention.

The resulting compositions were then injection moulded as described above and the test results are shown in Table 4 and in the Figures.

**Table 3**

| **Sample ID** | **PP (wt%)** | **Plasticiser (wt%)** | **Modifier-1 (wt%)** | **Modifier-2 (wt%)** | **Cross-linker (wt%)** | **Bioplastic (wt%)** | **Filler (wt%)** | **Comparative because missing ingredient(s):** |
|---|---|---|---|---|---|---|---|---|
| PPP-109* | 65 | Glycerol (28) | PVA (6) | None | Citric acid (1) | None | None | (iii), (iv) |
| PPP-110* | 63 | Glycerol (26) | None | Vinyl acetate ethylene copolymer (10) | Citric acid (1) | None | None | (iii), (iv) |
| PPP-112* | 44 | Glycerol (19) | PVA (6) | Vinyl acetate ethylene copolymer (10) | Citric acid (1) | None | Wood flour (20) | (iv) |
| PPP-113* | 55 | Glycerol (24) | None | None | Citric acid (1) | PBAT (20) | None | (iii) (v) |
| PPP-114* | 42 | Glycerol (17) | None | None | Citric acid (1) | PBAT (20) | Wood flour (20) | (v) |
| PPP-101* | 55 | Glycerol (24) | None | None | Citric acid (1) | PBSA (20) | None | (iii), (v) |
| PPP-102* | 42 | Glycerol (17) | None | None | Citric acid (1) | PBSA (20) | Wood flour (20) | (v) |
| PPP-103* | 44 | Glycerol (19) | PVA (6) | Vinyl acetate ethylene copolymer (10) | Citric acid (1) | PBSA (20) | None | (iii) |
| PPP-104 | 30 | Glycerol (13) | PVA (6) | Vinyl acetate ethylene copolymer (10) | Citric acid (1) | PBSA (20) | Wood flour (20) | |
| PPP-105* | 55 | Glycerol (24) | None | None | Citric acid (1) | PBS (20) | None | (iii), (v) |
| PPP-106* | 42 | Glycerol (17) | None | None | Citric acid (1) | PBS (20) | Wood flour (20) | (v) |
| PPP-107* | 44 | Glycerol (19) | PVA (6) | Vinyl acetate ethylene copolymer (10) | Citric acid (1) | PBS (20) | None | (iii) |
| PPP-108 | 30 | Glycerol (13) | PVA (6) | Vinyl acetate ethylene copolymer (10) | Citric acid (1) | PBS (20) | Wood flour (20) | |
| PPP-117* | 55 | Glycerol (24) | None | None | Citric acid (1) | PPC (20) | None | (iii), (v) |
| PPP-118* | 42 | Glycerol (17) | None | None | Citric acid (1) | PPC (20) | Wood flour (20) | (v) |
| PPP-119* | 44 | Glycerol (19) | PVA (6) | Vinyl acetate ethylene copolymer (10) | Citric acid (1) | PPC (20) | None | (iii) |
| PPP-120 | 30 | Glycerol (13) | PVA (6) | Vinyl acetate ethylene copolymer (10) | Citric acid (1) | PPC (20) | Wood flour (20) | |
| PPP-121* | 44 | Glycerol (19) | PVA (6) | Vinyl acetate ethylene copolymer (10) | Citric acid (1) | PLA (20) | None | (iii) |
| PPP-122 | 30 | Glycerol (13) | PVA (6) | Vinyl acetate ethylene copolymer (10) | Citric acid (1) | PLA (20) | Wood flour (20) | |

**Table 4**

| **Sample ID** | **Tensile modulus, MPa (STD)** | **Tensile strength, MPa (STD)** | **Impact Strength, kJ/m² (STD)** | **Comparative because missing ingredient(s):** |
|---|---|---|---|---|
| PPP-109 | 52 (10) | 5.8 (0.3) | 1.3 (0.4) | (iii), (iv) |
| PPP-110 | 194 (7) | 9.1 (0.1) | 1.0 (0.2) | (iii), (iv) |
| PPP-112 | 1246 (87) | 15.5 (1.1) | 1.2 (0.1) | (iv) |
| PPP-113 | 112(7) | 7.6 (0.2) | 1.8 (0.7) | (iii), (v) |
| PPP-114 | 1146(12) | 13.9 (0.2) | 1.7 (0.2) | (v) |
| PPP-101 | 643 (8) | 10.0 (0.1) | 3.0 (0.4) | (iii), (v) |
| PPP-102 | 2536 (19) | 17.8 (0.4) | 3.0 (0.2) | (v) |
| PPP-103 | 575 (14) | 13.3 (0.2) | 3.4 (0.3) | (iii) |
| PPP-104 | 1710 (66) | 18.3 (0.7) | 4.0 (0.2) | |
| PPP-105 | 800 (15) | 13.2 (0.2) | 2.4 (0.2) | (iii), (v) |
| PPP-106 | 3037 (83) | 23.5 (0.5) | 2.8 (0.1) | (v) |
| PPP-107 | 743 (13) | 17.3 (0.2) | 3.0 (0.6) | (iii) |
| PPP-108 | 2254 (36) | 26.1 (0.2) | 3.9 (0.7) | |
| PPP-117 | 60 (7) | 6.1 (0.1) | 1.9 (0.5) | (iii), (v) |
| PPP-118 | 1898 (65) | 18.9 (0.7) | 1.6 (0.3) | (v) |
| PPP-119 | 187 (11) | 8.7 (0.2) | 1.4 (0.2) | (iii) |
| PPP-120 | 1877 (22) | 24.2 (0.1) | 1.9 (0.1) | |
| PPP-121 | 1114 (29) | 21.5 (0.6) | 1.3 (0.1) | (iii) |
| PPP-122 | 3590 (29) | 39.6 (0.3) | 1.5 (0.2) | |

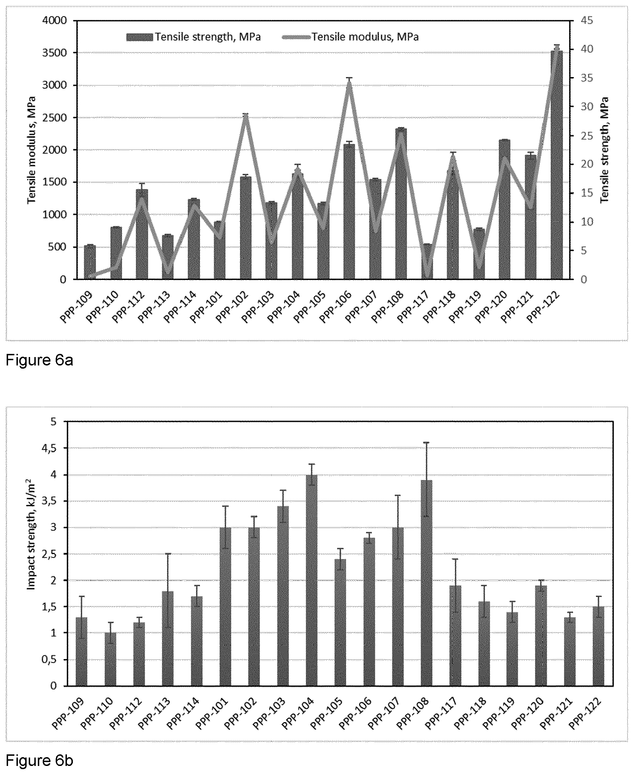

The results in table 4 and Figures 6a and 6b show that moulded articles comprising biodegradable compositions of the invention have desirable mechanical properties when a range of different bioplastics are present in combination with potato peel, plasticiser, filler and biodegradable polymer modifier. PPP-104, PPP-108, PPP-120 and PPP-122 each comprise PBSA, PBS, PPC and PLA respectively and each composition has a relatively high tensile modulus and tensile strength in comparison to the comparative compositions comprising the same bioplastic, without significantly decreasing impact strength.

The results in Table 4 also show the importance of the various ingredients in the compositions claimed. Taking the compositions comprising PBS (PPP105 to PPP108) as an example, the results show that omitting filler from the composition significantly decreases both tensile modulus and tensile strength whereas omitting a biodegradable polymer modifier decreases tensile strength and, in particular, impact strength. The sample missing both filler and biodegradable polymer modifier has significantly poorer mechanical properties compared to the composition of the invention (Tensile modulus 800 MPa cf. 2254 MPa, Tensile strength 13.2 MPa cf. 26.1 MPa and impact strength 2.4 kJ/m² cf. 3.9 kJ/m²).

Moreover exactly the same trend is seen in the results obtained with the other bioplastics, i.e. with PBSA (see PPP101 to PPP104) and PPC (see PPP117 to PPP120). These results show that each of the ingredients of the composition of the invention is important for achieving its desirable balance of properties.

## Claims

1. A moulded article comprising a biodegradable composition, wherein said composition comprises:
(i) potato peel;
(ii) a plasticiser;
(iii) a filler;
(iv) a bioplastic; and
(v) a biodegradable polymer modifier.

2. An article as claimed in claim 1, wherein said potato peel is non-chemically modified potato peel.

3. An article as claimed in claim 1 or 2, wherein the entirety of said potato peel is present in said composition.

4. An article as claimed in any preceding claim, wherein said composition comprises 30-70 wt% potato peel.

5. An article as claimed in any preceding claim, wherein said plasticiser is selected from sorbitol, maltitol, xylitol, mannitol, erythritol, glycerol, glycerol trioleate, citric acid, tributyl citrate, acetyl tri-ethyl citrate, glyceryl triacetate, polyethylene oxide, polypropylene oxide, ethylene glycol, diethylene glycol, polyethylene glycol, polypropylene glycol, urea and mixtures thereof, preferably glycerol.

6. An article as claimed in any preceding claim, wherein said filler is selected from wood flour, cellulose fibre, lignin, lignocellulose, chitosan, milled chicken feather, clay (e.g. kaolin, bentonite, montmorillonite, cloisite, halloysite and layered double hydroxide), talc, calcium carbonate, natural fibres (e.g. shredded wood, milled wheat straw, milled rice straw, grass stem, sugarcane bagasse, hemp, jute, flax, hemp, kenaf, chaff, rice husk, ground nut shells, seed hulls, coir) and mixtures thereof.

7. An article as claimed in any preceding claim, wherein said bioplastic is selected from polycaprolactone (PCL), thermoplastic starch (TPS), poly (lactic acid) (PLA), poly (glycolic acid), (PGA), poly (lactide-co-glycolide) (PLGA), poly (lactide-co-caprolactone) (PLCL), polybutylene succinate (PBS), polybutylene adipate terephthalate (PBAT), polybutylene succinate adipate (PBSA), polyhydroxyalkanoates (PHAs), polypropylene carbonate (PPC), polycyclohexene carbonate (PCHC) and mixtures thereof and preferably the bioplastic is selected from poly (lactic acid) (PLA), polybutylene succinate (PBS), polybutylene adipate terephthalate (PBAT), polybutylene succinate adipate (PBSA), polypropylene carbonate (PPC), and mixtures thereof.

8. An article as claimed in any preceding claim, wherein said biodegradable polymer modifier is a processing aid, preferably selected from polyvinyl alcohol, vinyl acetate-ethylene copolymer and mixtures thereof.

9. An article as claimed in any preceding claim, wherein said composition comprises
10-50 wt% plasticiser; and/or
5 to 60 wt% filler; and/or
5 to 50 wt% bioplastic; and/or
1 to 50 wt% biodegradable polymer modifier.

10. An article as claimed in any preceding claim, wherein said composition further comprises a cross-linking agent, preferably selected from formaldehyde, formic acid, disodium tetraborate (borax), citric acid, epichlorohydrin, malonic acid, oxidized sucrose, glutaraldehyde, trimetaphosphate, phosphorous oxychloride, sodium tripolyphosphate, hexamethoxy methylmelamine and mixtures thereof, and still more preferably citric acid.

11. An article as claimed in any preceding claim, wherein said article is injection moulded, and preferably said article has:
a tensile strength of at least 6 MPa;
a tensile modulus of at least 150 MPa;
an impact strength of at least 0.5 kJ/m²; and
a water absorption of 0 to 35 wt%.

12. A moulding composition as defined in any one of claims 1 to 10, comprising:
(i) potato peel;
(ii) a plasticiser;
(iii) a filler;
(iv) a bioplastic; and
(v) a biodegradable polymer modifier.

13. A method for preparing a moulding composition, comprising mixing potato peel; a plasticiser; a filler; a bioplastic; and a biodegradable polymer modifier.

14. A method for preparing an article as claimed in any one of claims 1-11 comprising:
(i) moulding, preferably injection moulding, a composition comprising potato peel; a plasticiser; a filler; a bioplastic; and a biodegradable polymer modifier, preferably a composition is as defined in any one of claims 2-11.

15. Use of a moulding composition as claimed in claim 12 in moulding, preferably injection moulding.

16. A method of moulding comprising:
(i) introducing a moulding composition as defined in any one of claims 1 to 11 into a mould;
(ii) moulding said composition; and
(iii) removing said composition from said mould.
